(19) Europäisches Patentamt
European Patent Office
Office européen des brevets

(11) **EP 2 471 877 A1**

(12) **EUROPÄISCHE PATENTANMELDUNG**

(43) Veröffentlichungstag:
**04.07.2012 Patentblatt 2012/27**

(21) Anmeldenummer: 10197397.2

(22) Anmeldetag: **30.12.2010**

(51) Int Cl.:
*C09C 1/22* (2006.01)          *C09C 1/24* (2006.01)
*C09C 1/34* (2006.01)          *C09C 1/36* (2006.01)
*C04B 20/10* (2006.01)         *C04B 26/26* (2006.01)
*C04B 40/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**51369 Leverkusen (DE)**

(72) Erfinder:
• **Chlopek, Dr. Krzysztof**
**47800 Krefeld (DE)**
• **Kischkewitz, Dr. Jürgen**
**40883 Ratingen (DE)**
• **Kohnert, Lutz**
**47228 Duisburg (DE)**
• **Inden, Holger**
**42113 Wuppertal (DE)**

(54) **Öl- und wachshaltige Mittel in stückiger Form mit bestimmten Wachsmischungen für die Asphalt- und Bitumeneinfärbung**

(57) Die vorliegende Erfindung betrifft Mittel enthaltend mindestens ein anorganisches Pigment, ein oder mehrere Öle, mindestens ein Fischer-Tropsch Wachs und mindestens ein zweites Wachs, Verfahren zu deren Herstellung und ihre Verwendung zum Einfärben von Baustoffen, vorzugsweise Asphalt, Bitumen, bituminösen Mischungen, Teer und teerhaltigen Zusammensetzungen, sowie ein Verfahren zum Einfärben von Baustoffen und die mit den Mitteln eingefärbten Baustoffe.

EP 2 471 877 A1

**Beschreibung**

Die vorliegende Erfindung betrifft Mittel enthaltend mindestens ein anorganisches Pigment, ein oder mehrere Öle, mindestens ein Fischer-Tropsch Wachs und mindestens ein zweites Wachs, Verfahren zu deren Herstellung und ihre Verwendung zum Einfärben von Baustoffen, vorzugsweise Asphalt, Bitumen, bituminösen Mischungen, Teer und teerhaltigen Zusammensetzungen, sowie ein Verfahren zum Einfärben von Baustoffen und die mit den Mitteln eingefärbten Baustoffe.

**Anwendungsgebiet**

Die Verarbeitung von Pigmenten verlangt zur Erzielung des optimalen Farbeindrucks ein Aufmahlen der Pigmente zu Primärteilchen. Die dadurch entstehenden Pulver stauben sehr stark und neigen aufgrund ihrer Feinteiligkeit zu Adhäsion und Kleben an Verpackungen, Maschinenteilen und Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen, wie zum Beispiel Eisenoxidpigmenten, ist eine Vermeidung von Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung in Baustoffen und organischen Medien ist deshalb das Ziel im Umgang mit Pigmenten. Dieses Ziel wird mehr oder weniger durch Anwendung von Granulationsverfahren auf Pigmente erreicht.

Grundsätzlich werden von Pigmentgranulaten, unabhängig davon, aus welchem Herstellungsverfahren sie stammen, vom Markt zwei sich in der Richtung gegensätzliche Eigenschaften gefordert: mechanische Stabilität (Abriebsstabilität) des Granulats und gute Dispergiereigenschaften im eingesetzten Medium. Die mechanische Stabilität ist verantwortlich für gute Transporteigenschaften sowohl beim Transport zwischen Hersteller und Anwender als auch für gute Dosierung und Fließeigenschaften beim Einsatz der Pigmente. Sie wird durch hohe Haftkräfte bewirkt und hängt zum Beispiel von Bindemittelmenge und -art ab. Andererseits wird die Dispergierbarkeit durch eine gute Mahlung vor der Granulierung (Nass- und Trockenmahlung), durch die mechanische Energie bei der Einarbeitung in das jeweilige Anwendungsmedium (Scherkräfte) und durch Dispergierhilfsmittel, die die Haftkräfte im Granulat bei der Einarbeitung in ein Medium sofort herabsetzen, beeinflusst. Zur Erzielung des optimalen Farbeindrucks ist ein Zerteilen der Pigmentgranulate zu Primärteilchen erforderlich. Bei anorganischen Pigmenten ist die Anwendung von größeren Mengen Dispergierhilfsmittel wegen des Kostenverhältnisses Hilfsmittel/Pigment eingeschränkt.

Zum Einfärben von Baustoffen, wie beispielsweise Asphalt, werden die Pigmente teilweise noch in pulverförmigem Zustand eingesetzt. Sie haben in gemahlener Form den Vorteil der guten Dispergierbarkeit. Die vollständige und homogene Verteilung solcher pulverförmigen anorganischen Pigmente erfolgt im Asphaltmischer in einer kurzen Zeit - in der Regel innerhalb einer Minute. Der Nachteil dieser feinen Pulver besteht darin, dass sie kein gutes Fließverhalten aufweisen und sich beim unsachgemäßen Lagern häufig zusammenballen und verklumpen können. Sie kleben an Verpackungen und Maschinenteilen, wodurch die genaue Dosierung bei der Verarbeitung erschwert wird. Ein weiterer Nachteil der Pulver besteht darin, dass sie zum Stauben neigen.

**Stand der Technik**

Die Staubvermeidung und verbesserte Dosierung bei der Anwendung von Pigmenten zur Einfärbung von organischen Medien, besonders von Asphalt, ist ein vorrangiges Ziel, weil die Asphaltmischanlagen sehr oft in Wohnbezirken lokalisiert sind.

Gemäß der Lehre von US 3,778,288 können Granulate als "Master Batches" unter Zugabe von Wachsen in einem Aufbaugranulationsverfahren über einen beheizbaren Mischer hergestellt werden. Dabei werden je nach Reaktionsbedingungen unterschiedliche Korngrößen erzielt. Das Anwendungsgebiet dieser Granulate liegt in der Färbung von Polymeren wie Kunststoffen, Wachsen oder Harzen. Die optimalen Korngrößen der Granulate liegen für solche Anwendungen zwischen 0,2 und 2 mm (70 bis 10 mesh). Dabei werden die als Bindemittel eingesetzten Wachse bevorzugt in Konzentrationen von 26% bis 65% bezogen auf die Gesamtmenge der Zusammensetzung verwendet. Dieser hohe Bindemittelanteil ist für die Anwendung der Färbung von Baustoffen nachteilig, da das Bindemittel einen negativen Effekt auf die Eigenschaften der Baustoffe ausüben kann. Zudem sind deutlich höhere Mengen an "Master Batch" im Vergleich zum pulverförmigen anorganischen Pigment notwendig, um die gleiche Färbewirkung zu erzielen, wobei die Anwendung damit unwirtschaftlich wird.

In EP 0 567 882 A1 wurde ein Verfahren zur Einfärbung von Asphalt und/oder Bitumen mit anorganischen Pigmentgranulaten beschrieben, in dem die Granulate unter Zusatz von Ölen und/oder Wachsen entstehen können. Mit der angegebenen Menge von Additiven (0,01 - bis 10 Gew.% in Bezug auf Pigment) kann man zwar die Dispergierbarkeit der Granulate in Bitumen verbessern, allerdings können mit diesem Verfahren keine Granulate mit ausreichender mechanischen Stabilität hergestellt werden.

EP 1 598 395 A1 beschreibt eine Zusammensetzung auf Basis von Copolymeren von Ethyl-Vinyl-Acetat als Zusatzstoff für Asphalt. Hierbei handelt es sich um Extrusionsgranulate. Dem Fachmann ist bekannt, dass Kunststoffextrusion mit Eisenoxid aufgrund der Abrasionseigenschaften des Pigmentes zu großem Verschleiß der Geräte führt, die bei der Asphaltverarbeitung eingesetzt werden.

In US 6,706,110 B2 und US 6,780,234 B2 wurden Pigmentgranulate für die Einfärbung von unpolaren Medien wie Asphalt und Bitumen unter Zusatz von Wachsen und Dispergiermittel für polare Medien offenbart. Bei dem Verfahren zu deren Herstellung handelt es sich um ein Sprühgranulationsverfahren von wässrigen Systemen. Die Sprühgranulation erfordert wegen der Tropfenbildung die Verwendung von gut fließfähigen, also dünnflüssigen Suspensionen. Da für den Trocknungsvorgang eine größere Menge an Wasser zu verdampfen ist, ist das Verfahren jedoch energieaufwändig und deshalb vor allem dann vorteilhaft anzuwenden, wenn die zu granulierenden Pigmente bedingt durch den Pigmentherstellungsprozess in der Nassphase, beispielsweise in einer wässrigen Suspension oder Paste, vorliegen. Bei Pigmenten, die über einen trockenen Herstellungsprozess, beispielsweise einen Glühprozess, hergestellt wurden, bedeutet die Sprühgranulation einen zusätzlichen Verfahrensschritt, da das bereits in trockenem Zustand anfallende Pigment wieder in Wasser aufgeschlämmt und getrocknet werden muss. Zusätzlich weisen die Sprühgranulate eine Korngröße zwischen 20 bis 500 μm auf, was bei der Dosierung signifikante Staubentwicklung verursacht. In der Asphaltverarbeitung werden aus der Sichtweise des Arbeitsschutzes Partikel mit einer Korngröße von kleiner als 1 mm noch als Staub angesehen.

Die nach dem Stand der Technik bereitgestellten Pigmentzusammensetzungen eignen sich also nicht für eine wirtschaftliche und unter arbeitstechnischen Gesichtspunkten vertretbare Verwendung zur Einfärbung von Baustoffen, die bei höheren Temperaturen als Umgebungstemperatur verarbeitet werden, wie Asphalt, Bitumen, bituminöse Mischungen, Teer und teerhaltige Zusammensetzungen.

Der vorliegenden Erfindung lag daher die Aufgabe zugrunde, staubarme, gut dosierbare anorganische Pigmente enthaltende Mittel bereitzustellen, die wirtschaftlich herstellbar sind, sich zum Einfärben von Baustoffen eignen, die bei höheren Temperaturen als Umgebungstemperatur verarbeitet werden, und die idealerweise die mechanische Festigkeit des Baustoffes nicht ungünstig beeinflussen.

Überraschenderweise gelingt die Lösung der gestellten Aufgabe durch die Bereitstellung von Mitteln, die neben mindestens einem anorganisches Pigment und mindestens einem Öl mindestens zwei verschiedene Wachse enthalten.

Gegenstand der Erfindung ist daher ein Mittel, bei dem mindestens 50 Gew.% des Mittels eine Korngröße von 1 mm oder größer, bevorzugt von 1 bis 10 mm, besonders bevorzugt von 1 bis 6 mm, aufweisen, enthaltend

- mindestens ein anorganisches Pigment,

- ein oder mehrere Öle,

- mindestens ein Fischer-Tropsch Wachs mit einem Erstarrungspunkt zwischen 50 und 140°C, bevorzugt zwischen 70 und 120°C, besonders bevorzugt zwischen 80 und 110°C, ganz besonders bevorzugt zwischen 90 und 110°C, und einer Nadelpenetration bei 25°C von bis zu 1 mm, bevorzugt bis zu 0,7 mm, besonders bevorzugt bis zu 0,4 mm und

- mindestens ein zweites Wachs mit einem Erstarrungspunkt zwischen 50 und 140 °C, bevorzugt zwischen 70 und 120 °C, besonders bevorzugt zwischen 80 und 110 °C, ganz besonders bevorzugt zwischen 90 und 110°C, wobei dieses Wachs kein Fischer-Tropsch Wachs und kein Polyolefinwachs ist.

Bevorzugt enthält das erfindungsgemäße Mittel ein Öl, ein Fischer-Tropsch Wachs und ein zweites Wachs. Bevorzugt weisen mindestens 70 Gew.%, besonders bevorzugt mindestens 80 Gew.%, des Mittels eine Korngröße von 1 mm oder größer, bevorzugt von 1 bis 10 mm, besonders bevorzugt von 1 bis 6 mm auf.

Das erfindungsgemäße Mittel erfüllt die Anforderungen bezüglich der Dispergierbarkeit in den Anwendungsmedien und bezüglich des erzielten Farbtons im Vergleich zum ungranulierten Pigmentpulver in den gefärbten Anwendungsmedien und beeinflusst zudem die Eigenschaften des Baustoffes (z.B. Festigkeit von Asphalt unter mechanischer Belastung), der mit dem Mittel gefärbt wird, nicht nachteilig. Die mechanische Festigkeit ist eine wesentliche Eigenschaft des Asphalt. Bei einer Verringerung der mechanischen Festigkeit entstehen z.B. leichter Spurrillen, wenn Fahrzeuge auf den mit diesem Asphalt belegten Straßen oder Wegen rollen.

Das erfindungsgemäße Mittel liegt in stückiger Form vor. Unter "Mittel" sind im Folgenden Agglomerate von Primärpartikeln zu verstehen, die sich von der maximalen räumlichen Ausdehnung her von der der Primärpartikel unterscheiden. Unter "Mittel" werden auch Granulate verstanden. Unter "Granulat" bzw. "in Granulatform" wird im Kontext der Erfindung jedes Material verstanden, dessen mittlere Korngröße im Vergleich mit den Ausgangsmaterialien durch einen Behandlungsschritt vergrößert worden ist. "Granulat" bzw. "in Granulatform" umfasst daher nicht nur Sprühgranulate, Kompaktierungsgranulate (Press- oder Brikettiergranulate) oder Aufbaugranulate, sondern auch zum Beispiel Produkte einer Nass- oder Feuchtbehandlung mit anschließender Zerkleinerung, und Produkte trockener oder im Wesentlichen trockener Verarbeitungsschritte, zum Beispiel trocken hergestellte Granulate, Briketts und dergleichen. Bevorzugt sind die erfindungsgemäßen Mittel Aufbaugranulate, besonders bevorzugt welche, die über einen beheizbaren Mischer hergestellt werden.

Die erfindungsgemäßen Mittel liegen bevorzugt in Form von sphärischen Agglomeraten vor, wobei diese sowohl eine Kugelform oder eine ellipsoide Form sowie deren Zwischenformen aufweisen können.

Es sei darauf hingewiesen, dass vom Umfang der Erfindung auch beliebige Kombinationen der genannten Bereiche und Vorzugsbereiche für jedes Merkmal einschließlich von Kombinationen von Vorzugsbereichen umfasst sind.

In den erfindungsgemäßen Mitteln sind die anorganischen Pigmente bevorzugt aus der Gruppe von Eisenoxiden, Eisenoxidhydroxiden, Chromoxiden, Titandioxiden und/oder Mischphasenpigmenten auf Basis von Metalloxiden ausgewählt. Zu den Eisenoxiden gehören beispielsweise Hämatit (Eisenoxid Rot), oder Magnetit (Eisenoxid Schwarz). Zu den Eisenoxidhydroxiden gehört z.B. Goethit (Eisenoxid Gelb). Mischphasenpigmente auf Basis von Metalloxiden sind z.B. Zinkferrite (Mischphasenpigment aus Zinkoxid und Eisenoxid) oder Manganferrite (Mischphasenpigment aus Manganoxid und Eisenoxid). Das erfindungsgemäße Mittel kann ein oder mehrere anorganische Pigmente enthalten. Bevorzugt enthält das erfindungsgemäße Mittel ein anorganisches Pigment.

Die erfindungsgemäßen Mittel enthalten ein oder mehrere Öle. Als Öle werden in dem erfindungsgemäßen Zusammenhang unpolare oder leicht polare, nicht leichtflüchtige, bei Raumtemperatur flüssige Substanzen verstanden. Aus dieser Gruppe eignen sich bevorzugt Öle, die aus der Gruppe von synthetischen, mineralischen (aus Erdölen oder Kohlen gewonnene), tierischen oder pflanzlichen Öle ausgewählt sind. Ebenfalls bevorzugt sind Öle mit einer kinematischen Viskosität von 1,6 bis 1.500 $mm^2$/s bei 40°C (gemessen nach DIN 51562). Besonders bevorzugt sind in den erfindungsgemäßen Mitteln synthetische Öle auf Kohlenwasserstoffbasis oder mineralische (aus Erdölen oder Kohlen gewonnene) Öle enthalten.

In den erfindungsgemäßen Mittel beträgt die Gesamtmenge an Öl oder Ölen bevorzugt von 0,1 % bis 5,0 Gew. %, besonders bevorzugt 0,5 bis 3 Gew.%, bezogen auf die Gesamtmenge des Mittels. Das erfindungsgemäße Mittel kann ein oder mehrere Öle enthalten. Bevorzugt enthält das erfindungsgemäße Mittel ein Öl.

Unter Wachs wird eine Substanz verstanden, die grob bis feinkristallin ist, über 40°C ohne Zersetzung schmilzt und schon wenig oberhalb des Schmelzpunktes verhältnismäßig niedrigviskos und nicht fadenziehend ist.

Fischer-Tropsch Wachse sind synthetische aliphatische Kohlenwasserstoffe, d.h. synthetische Paraffin-Wachse mit hoher Molekülmasse und einer Kettenlänge von 20 bis 120 Kohlenstoffatomen. Fischer-Tropsch Wachse werden über das sogenannten Fischer-Tropsch-Verfahren aus Synthesegas (Wasserstoff, Kohlenmonoxid) aus Kohlevergasung oder aus Erdgas in Gegenwart von Katalysatoren hergestellt. Zu der Gruppe der Fischer-Tropsch Wachse gehören auch oxidierte Fischer-Tropsch Wachse. Fischer-Tropsch Wachse weisen in der Regel einen Erstarrungspunkt von größer als 70°C auf. Die physikalische Eigenschaft des Erstarrungspunktes, der eine größere technische Bedeutung für die Verarbeitung von Wachsen als der Schmelzpunkt hat, wird bei Wachsen oft anstatt des Schmelzpunktes gemessen. Der Erstarrungspunkt kann nach ISO 2207 oder nach ASTM D 938 gemessen werden.

Fischer-Tropsch Wachse sind relativ hart, was über die Nadelpenetration bei 25°C in der Einheit "mm" gemessen werden kann. Die Fischer-Tropsch Wachse weisen bevorzugt eine Nadelpenetration bei 65°C von bis zu 3 mm, auf.

Für die Messung der Nadelpenetration bei unterschiedlichen Temperaturen, wie z.B. 25°C oder 65°C existieren z.B. die Methoden nach ASTM D 1321 oder DIN 51579. Für Fischer-Tropsch Wachse liegen typische Werte der Nadelpenetration bei 25°C im Bereich von 0,1 mm bis 1 mm. Das erfindungsgemäße Mittel kann ein oder mehrere Fischer-Tropsch Wachse enthalten. Bevorzugt enthält das erfindungsgemäße Mittel ein Fischer-Tropsch Wachs.

Das "zweite Wachs", das in dem erfindungsgemäßen Mittel enthalten ist, ist weder ein Fischer-Tropsch Wachs noch ein Polyolefinwachs. Unter Polyolefinwachsen sind Wachse aus Polymeren von derivatisierten oder nicht derivatisierten Alkenen, wie z.B. Ethylen, Propylen oder Styrol (Phenylethen), die durch Polymerisation hergestellt werden, zu verstehen.

Bevorzugt ist das zweite Wachs aus der Gruppe von Mineralwachsen, Montanwachsen, pflanzlichen Wachsen und/oder tierischen Wachsen ausgewählt. Mineralwachse sind Gemische normaler, verzweigtkettiger und ringförmiger gesättigter Kohlenwasserstoffe, die durch Raffination von Wachsen fossilen Ursprungs gewonnen werden, wie z.B. Ceresin. Montanwachse sind aus Braunkohlesorten extrahierbare natürliche Wachse. Diese sind aus Harzen, Wachsen u. Fetten tertiärer Pflanzen entstanden. Pflanzliche Wachse sind z.B. Zuckerrohrwachs oder Carnaubawachs. Zu den tierischen Wachsen gehören Walrat, Wollwachs und Bienenwachs.

Insbesondere eignen sich als zweites Wachs welche aus den oben genannten Gruppen, die bei 120°C eine dynamische Viskosität kleiner als 800 mPas, bevorzugt von kleiner als 300 mPas, ganz besonders bevorzugt von 1 bis 100 mPas, aufweisen (gemessen nach DIN 53019). Bevorzugt sind als zweites Wachs Mineralwachse, besonders bevorzugt mikrokristalline Hartwachse. Diese gehören zu der Gruppe der Mineralwachse. Ganz besonders bevorzugt enthalten die erfindungsgemäßen Mittel als zweites Wachs mikrokristalline Hartwachse mit einer dynamischen Viskosität bei 120°C von 1 bis 100 mPas. Das erfindungsgemäße Mittel kann ein oder mehrere "zweite Wachse" enthalten. Bevorzugt enthält das erfindungsgemäße Mittel ein "zweites Wachs".

Bevorzugt beträgt im erfindungsgemäßen Mittel der Mengenanteil von Fischer-Tropsch Wachs bezogen auf die Gesamtmenge an Fischer-Tropsch Wachs und zweitem Wachs von 20 Gew.% bis 80 Gew.%, besonders bevorzugt von 30 bis 70 Gew.%, ganz besonders bevorzugt von 35 bis 65 Gew.%. In den erfindungsgemäßen Mitteln beträgt die Gesamtmenge an Fischer-Tropsch Wachs und zweitem Wachs bevorzugt von 5 bis 25 Gew.%, besonders bevorzugt von 8 bis 20 Gew.%, ganz besonders bevorzugt von 10 bis 18 Gew.%, bezogen auf die Gesamtmenge des Mittels.

Die Fischer-Tropsch Wachse und die zweiten Wachse können dabei in ihrer ursprünglichen, d.h. nicht chemisch modifizierten Form, oder in deren chemisch modifizierten Formen vorliegen.

Die erfindungsgemäßen Mittel können zusätzlich weitere Hilfsstoffe enthalten, die jedoch die Eigenschaften des Mittels wie Staubverhalten, Dosierbarkeit und Dispergierbarkeit sowie die mechanische Festigkeit des Asphaltes, der mit diesen Mitteln gefärbt wurde, nicht verringern dürfen, oder die erfindungsgemäßen Mittel enthalten diese weiteren Hilfsstoffe eben nicht.

Das erfindungsgemäße Mittel enthält besonders bevorzugt die Kombination aus Eisenoxid oder Chromoxid, einem mineralischen Öl, einem Fischer-Tropsch Wachs und einem mikrokristallinen Hartwachs.

Die Erfindung betrifft auch Verfahren zur Herstellung der erfindungsgemäßen Mittel in drei alternativen Ausführungsformen (Varianten A, B oder C), dadurch gekennzeichnet, dass entweder

a) mindestens ein anorganisches Pigment mit einem oder mehreren Ölen vermischt und

b) das Gemisch aus Schritt a) mit einem oder mehreren Fischer-Tropsch Wachsen und einem oder mehreren zweiten Wachsen vermischt wird,

c) die Mischung aus Schritt b) bei einer Temperatur oberhalb der Erstarrungspunkte der Fischer-Tropsch Wachse und der zweiten Wachse weiter gemischt wird (Variante A),
oder

a') mindestens ein anorganisches Pigment mit einem oder mehreren Fischer-Tropsch Wachsen und einem oder mehreren zweiten Wachsen vermischt und

b') das Gemisch aus Schritt a') mit einem oder mehreren Ölen vermischt wird,

c') die Mischung aus Schritt b') bei einer Temperatur oberhalb der Erstarrungspunkte des Fischer-Tropsch Wachse und der zweiten Wachse weiter gemischt wird (Variante B),
oder

mindestens ein anorganisches Pigment gleichzeitig mit einem oder mehreren Ölen und mit einem oder mehreren Fischer-Tropsch Wachsen und einem oder mehreren zweiten Wachsen vermischt wird, und die Mischung anschließend bei einer Temperatur oberhalb der Erstarrungspunkte der Fischer-Tropsch Wachse und der zweiten Wachse weiter gemischt wird (Variante C).

Die Bildung des Mittels kann in diesem Zusammenhang auch als Granulataufbau bezeichnet werden. In bevorzugten Ausführungsformen der Varianten A, B und C des erfindungsgemäßen Verfahrens werden als Öle, Fischer-Tropsch Wachs und zweites Wachs die spezifischen Produkte eingesetzt, die unter diesen generischen Begriffen bei der Beschreibung des erfindungsgemäßen Mittels selbst offenbart wurden.

Das Herstellungsverfahren der Varianten A, B und C umfasst bevorzugt die Schritte, dass das entstandene Mittel auf Umgebungstemperatur abgekühlt und anschließend auf einen Korngrößenbereich gesiebt wird, sodass mindestens 50 Gew.%, bevorzugt mindestens 70 Gew.%, besonders bevorzugt mindestens 80 Gew.%, des Mittels eine Korngröße von 1 mm oder größer, bevorzugt von 1 bis 10 mm, besonders bevorzugt von 1 bis 6 mm, aufweisen, oder es umfasst diese Schritte eben nicht. Dabei kann das Abkühlen des Mittels auf Umgebungstemperatur in einem Schwingförderer oder Wirbelbettkühler oder auf andere Weise mit flüssigen oder gasförmigen Medien durchgeführt werden oder eben nicht.

Bei der Ausübung der Herstellungsverfahren der Varianten A, B und C ist es auch möglich, dass das nach der Siebung erhaltene Ober- und/oder Unterkorn, also das Mittel oberhalb und/oder unterhalb der gewünschten Korngröße, in das Herstellungsverfahren des Mittels zurückgeführt wird oder eben nicht. Während des Herstellungsverfahrens bilden sich aus dem zurückgeführten Ober- und/oder Unterkorn zusammen mit den anderen Komponenten, die in das Verfahren eingesetzt werden, die erfindungsgemäßen Mittel.

Bei dem erfindungsgemäßen Verfahren werden in den Ausführungsformen, in der die Zugabe des Öls oder der Öle, des Fischer-Tropsch Wachses und des zweiten Wachses zum anorganischen Pigment nacheinander erfolgt (Varianten A und B), die Schritte a) oder a') bevorzugt unterhalb der Erstarrungspunkte des Fischer-Tropsch Wachses und des zweiten Wachses durchgeführt. Die Zugabe des Öls oder der Öle in Variante A oder der Wachse in Variante B zum anorganischen Pigment kann vor Beginn oder während des Mischvorganges durchgeführt werden. In Variante A findet während des Mischvorganges eine gleichmäßige Verteilung des Öls auf dem anorganischen Pigment statt. Dabei bleibt das Pulver fließfähig. Anschließend wird die Mischung bevorzugt vor den Schritten b) oder b') auf 60 bis 150°C, besonders bevorzugt auf 90 bis 140°C, aufgeheizt. Dann werden in Variante A die Wachse in Form von Pulver, Flocken, Stücken oder geschmolzen zu dem mit Öl behandelten anorganischen Pigment oder in Variante B das Öl bzw. die Öle zu dem mit den Wachsen vermischten anorganischen Pigment gegeben. Danach wird die Temperatur der Mischung auf eine Temperatur oberhalb der Erstarrungspunkte des Fischer-Tropsch Wachses und des zweiten Wachses weiter erhöht. Bevorzugt werden die Schritte c) oder c') bei 110°C bis 230°C durchgeführt.

Die Temperaturerhöhung wird entweder durch die Scherkräfte während des Mischvorganges und/oder durch externe Wärmezufuhr erzeugt. Dabei schmilzt das Wachs und verteilt sich auf dem mit Öl behandelten anorganischen Pigment, wobei die Bildung des Mittels erfolgt.

Bei dem erfindungsgemäßen Verfahren wird in der Ausführungsform, in der die Zugabe des Öls oder der Öle, des Fischer-Tropsch Wachses und des zweiten Wachses zum anorganischen Pigment gleichzeitig erfolgt (Variante C), das Vermischen des anorganischen Pigments mit dem oder den Ölen, dem Fischer-Tropsch Wachs und dem zweiten Wachs bei Temperaturen unterhalb oder oberhalb der Erstarrungspunkte der Wachse durchgeführt. Bevorzugt erfolgt das Vermischen des anorganischen Pigments mit dem oder den Ölen, dem Fischer-Tropsch Wachs und dem zweiten Wachs bei Temperaturen unterhalb der Erstarrungspunkte der Wachse. Anschließend wird die Temperatur der Mischung auf eine Temperatur oberhalb der Erstarrungspunkte des Fischer-Tropsch Wachses und des zweiten Wachses, bevorzugt auf 110°C bis 230°C, erhöht und der Mischvorgang weiter fortgeführt. Die Temperaturerhöhung wird entweder durch die Scherkräfte während des Mischvorganges und/oder durch externe Wärmezufuhr erzeugt. Dabei schmilzt das Wachs und verteilt sich mit dem Öl auf dem anorganischen Pigment, wobei die Bildung des Mittels erfolgt.

Für das Mischen können verschiedene beheizbare Mischaggregate mit ausreichender Mischwirkung und ausreichenden Scherkräften eingesetzt werden. Bevorzugt wird als Mischer ein beheizbarer Henschel-Mischer eingesetzt.

Die Korngröße der erfindungsgemäßen Mittel nimmt bei den Herstellungsverfahren der Varianten A, B und C während des Mischvorganges stetig zu. Der Mischvorgang wird daher zum geeigneten Zeitpunkt abgebrochen. Wird der Mischvorgang zu kurz durchgeführt, werden Mittel mit zu kleiner Teilchengröße erhalten. Bei einer zu langen Mischzeit werden die Mittel zu grob, was die Dispergierbarkeit in Asphalt negativ beeinflussen kann. Dies führt zu einer ungleichmäßigen Färbung des Asphaltes. Der Mischvorgang wird deshalb dann abgebrochen, wenn der maximale prozentuale Anteil des Mittels mit einer Korngröße von 1 mm oder größer, bevorzugt von 1 bis 10 mm, besonders bevorzugt von 1 bis 6 mm, bezogen auf die Gesamtmenge des Mittels, erreicht wurde.

Nach Abbruch des Mischvorganges in den Varianten A, B und C des erfindungsgemäßen Herstellungsverfahrens wird das erfindungsgemäße Mittel auf Umgebungstemperatur abgekühlt und anschließend auf einen Korngrößenbereich gesiebt, sodass mindestens 50 Gew.% des Mittels eine Korngröße von 1 mm oder größer, bevorzugt mindestens 70 Gew.% des Mittels eine Korngröße von 1 mm oder größer, besonders bevorzugt mindestens 80 Gew.% des Mittels eine Korngröße von 1 mm oder größer,

oder

mindestens 50 Gew.% des Mittels eine Korngröße von 1 bis 10 mm, bevorzugt mindestens 70 Gew.% des Mittels eine Korngröße von 1 bis 10 mm, besonders bevorzugt mindestens 80 Gew.% des Mittels eine Korngröße von 1 bis 10 mm,

oder

mindestens 50 Gew.% des Mittels eine Korngröße von 1 bis 6 mm, bevorzugt mindestens 70 Gew.% des Mittels eine Korngröße von 1 bis 6 mm, besonders bevorzugt mindestens 80 Gew.% des Mittels eine Korngröße von 1 bis 6 mm, aufweisen.

Das erfindungsgemäße Mittel zeichnet sich aus durch eine gute Fließfähigkeit, durch einen geringen Staubanteil, eine gute Abriebstabilität sowie durch eine hohe Dispergierbarkeit in bitumen- oder teerhaltigen Baustoffen sowie durch einen ähnlich hohen und vergleichbaren Farbton im Anwendungsmedium im Vergleich zum ungranulierten anorganischen Pigment sowie dadurch, dass die mechanische Belastbarkeit von Asphalt, der mit dem erfindungsgemäßen Mittel gefärbt wurde, unverändert hoch bleibt.

Die Erfindung betrifft auch die Verwendung des erfindungsgemäßen Mittels zum Einfärben von Baustoffen, vorzugsweise Asphalt, Bitumen, bituminösen Mischungen, Teer und teerhaltigen Zusammensetzungen. Hierzu wird das erfindungsgemäße Mittel dem Baustoff bei einer Temperatur oberhalb seines Erstarrungspunktes unter Mischen zugegeben. Der Mischvorgang wird fortgesetzt, bis die gleichmäßige Färbung des Baustoffes erreicht ist.

Die Erfindung betrifft auch ein Verfahren zum Einfärben von Baustoffen, vorzugsweise Asphalt, Bitumen, bituminösen Mischungen, Teer und teerhaltigen Zusammensetzungen umfassend Mischen des erfindungsgemäßen Mittels mit dem Baustoff oberhalb dessen Erweichungspunktes. Dabei wird der Baustoff solange mit dem Mittel gemischt, bis die gleichmäßige Färbung des Baustoffes erreicht ist.

Die Erfindung betrifft ebenfalls Baustoffe, vorzugsweise Asphalt, Bitumen, bituminöse Mischungen, Teer und teerhaltige Zusammensetzungen, die mit dem erfindungsgemäßen Mittel gefärbt sind.

Der Gegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

**Beispiele und Methoden**

**I. Beschreibung der verwendeten Mess- und Prüfmethoden**

Die Ergebnisse der Messungen zu den Beispielen 1 bis 5 sind in Tabelle 1 zusammengefasst.

**I.1 Dispergierbarkeit in Asphalt**

Die Bestimmung der Dispergierbarkeit in Asphalt erfolgte nach folgendem Verfahren: die Zuschläge (mineralische Füllstoffe zur Herstellung des Asphalts) wurden in einem beheizbaren Labormischer (Rego-Mischer) zusammen mit einem Straßenbaubitumen des Typs Pigmental® 50/70 (Handelsprodukt der Fa. TOTAL Bitumen Deutschland GmbH) 30 Sekunden lang bei 180 °C homogenisiert. Danach wurde die zu messende Pigmentprobe, d.h. die Mittel gemäß den Beispielen, zugegeben und weitere 120 Sekunden bei der Temperatur gemischt. Jeweils wurden 3 Gew.% Pigmentprobe zugegeben, bezogen auf die gesamte Zusammensetzung. Mit der Mischung werden Prüfkörper nach Marshall hergestellt ("The Shell Bitumen Handbook, Shell Bitumen U.K., 1990, Seite 230-232). Farbtonunterschiede der Marshall-Körper wurden farbmetrisch durch Vergleich der Rotwerte a* im Purton gegen einen Marshall-Körper beurteilt, der mit einer gleichen Menge an Bayferrox® 130-Pulver (Eisenoxid-Rotpigment der Firma LANXESS Deutschland GmbH, Standard 2001 mit Absolutwerten der Farbmessung Rx = 6,46, Ry = 5,12, Rz = 3,92) hergestellt wurde (Messgerät: Minolta Chromameter II, Normlichtart C, CIELAB-System, DIN 5033, DIN 6174). Unterschiede in den a*-Werten ($\Delta$a*-Werte) kleiner 1,0 Einheiten sind visuell nicht unterscheidbar. Ist der Betrag des a*-Wertes des Prüfkörpers, der mit der zu messenden Probe gefärbt wurde, kleiner als der des Prüfkörpers, der mit dem Bayferrox® 130-Pulverbezug gefärbt wurde, weist dies auf eine geringere Dispergierbarkeit der zu messenden Probe im Vergleich zum Pulverbezug hin. Je kleiner der Betrag des $\Delta$a*-Werte bei dieser Messung ist, desto ähnlicher ist der Farbton der unterschiedlichen Messungen, was auf einen geringen Unterschied der Dispergierbarkeit der zu messenden Probe im Vergleich zu dem Bayferrox® 130-Pulverbezug hinweist.

**I.2 Bestimmung der Kornfraktion der Mittel**

Die Bestimmung der Kornfraktion wurde mit einem Vibrationssiebgerät Retsch Vibtronic Typ VE 1 mit Siebsätzen mit 1 und 6 mm durchgeführt (Siebsätze nach DIN ISO 3310). Das Mittel (50,0g) in stückiger Form wurde auf das oberste, größte Sieb eingewogen. Der Siebsatzturm wurde 2 min mit Schwingungsintensität 1 mm vibriert. Danach wurde jedes einzelne Sieb gewogen und die Siebfraktion bestimmt.

**I.3 Bestimmung des Abriebswertes der Mittel**

Die Bestimmung des Abriebswertes wurde mit einer Rhewum-Luftstrahlsiebmaschine LPS 200 MC durchgeführt. Folgende Einstellungen wurden gewählt: Düse 1 mm, Volumenstrom 35 m$^3$/h, 1 mm Sieb, Drehzahl 18 rpm. Das Sieb nach DIN ISO 3310 wurde leer und anschließend mit 20 g Probe ausgewogen. Danach wurde die Siebmaschine eingeschaltet und die Probe wurde 1, 2, 3, 4 und 5 Minuten beansprucht (das Siebgut wurde durch den Luftstrahl aufgewirbelt). Nach jeder Minute wurde das Sieb mit der Probe gewogen und später auf die Maschine gesetzt und weitere Zeit gesiebt.

$$\text{Berechnung:} \quad (20\text{g (Einwaage)} - \text{Auswaage}) / 20\text{g Einwaage x } 100 =$$

$$\text{Gew.\% Unterkorn (Abriebswert)}$$

Als gute Abriebsstabilität (= niedriger Abriebswert) gemäß diesem Test wird eine Menge von 10 Gew.% oder weniger, bevorzugt 5 Gew.% oder weniger und besonders bevorzugt von 2 Gew.% oder weniger an Unterkorn gemessen nach einer Aufwirbelung des Siebgutes über einen Zeitraum von 5 Minuten (= Abriebswert nach 5 min., s. Tabelle 1) definiert.

**I.4 Bestimmung der Nadelpenetration**

Die Prüfung wurde anhand definiertes Mischgutes (Asphaltbetondeckschicht AC 8 DN mit Straßenbitumen 50/70 der Fa. Th-Asphalt, MA Eschenau, Hormersdorf, Zirndorf, nach den Technischen Lieferbedingungen für Asphaltmischgut für den Bau von Verkehrsflächen, TL Asphalt-StB 07) durchgeführt. Die Konzentration der Mittel gemäß den Beispielen betrug 2,73 Gew.% in der gesamten, eingefärbten Asphaltmischung. Die Dispergierung der Mittel gemäß den Beispielen in dem Mischgut wurde bei gleicher Temperatur und bei gleichen Mischzeiten durchgeführt wie in der Methode I.1 beschrieben. Die Nadelpenetration wurde in dem zurück gewonnenen Bindemittel (gemäß TP Asphalt-StB) nach DIN EN 1426 bestimmt.

**I.5 Bestimmung des Erweichungspunktes Ring und Kugel**

Die Prüfung wurde anhand definiertes Mischgutes (Asphaltbetondeckschicht AC 8 DN mit Straßenbitumen 50/70 der Fa. Th-Asphalt, MA Eschenau, Hormersdorf, Zirndorf, nach den Technischen Lieferbedingungen für Asphaltmischgut für den Bau von Verkehrsflächen, TL Asphalt-StB 07) durchgeführt. Die Konzentration der Mittel gemäß den Beispielen betrug 2,73 Gew.% in der gesamten, eingefärbten Asphaltmischung. Die Dispergierung der Mittel gemäß den Beispielen in dem Mischgut wurde bei gleicher Temperatur und bei gleichen Mischzeiten durchgeführt wie in der Methode I.1 beschrieben. Der Erweichungspunkt Ring und Kugel wurde in dem zurück gewonnenen Bindemittel (gemäß TP Asphalt-StB) nach DIN EN 1427 bestimmt.

**I.6 Bestimmung des Hohlraumgehaltes**

Für die Prüfung wurden Marshallkörper nach TP Asphalt-StB anhand definiertes Mischgutes (Asphaltbetondeckschicht AC 8 DN mit Straßenbitumen 50/70 der Fa. Th-Asphalt, MA Eschenau, Hormersdorf, Zirndorf, nach den Technischen Lieferbedingungen für Asphaltmischgut für den Bau von Verkehrsflächen, TL Asphalt-StB 07) durchgeführt. Die Konzentration der Mittel gemäß den Beispielen betrug 2,73 Gew.% in der gesamten, eingefärbten Asphaltmischung. Die Dispergierung der Mittel gemäß den Beispielen in dem Mischgut wurde bei gleicher Temperatur und bei gleichen Mischzeiten durchgeführt wie in der Methode I.1 beschrieben. Für die Prüfung wurde Rohdichte von pigmentiertem Asphaltmischgut und Raumdichte von pigmentierten Asphaltprobekörpern (beide Eigenschaften nach TP Asphalt-StB) bestimmt. Der Hohlraumgehalt V berechnet sich aus der Rohdichte des Asphaltmischgutes (pm) und der Raumdichte (pb) des Probekörpers nach der Gleichung:

$$V = ((pm-pb)/pm) * 100.$$

**II: Beispiele**

**Eigenschaften der verwendeten anorganischen Pigmente, Öle und Wachse**

**Bayferrox® 130 Pigmentpulver** der Fa. Lanxess Deutschland GmbH: Hämatit (rotes Eisenoxid) mit der BET-Oberfläche (nach DIN ISO 9277) 7-9 $m^2$/g

**Energol RC-R 100** der Fa. BP: mineralisches Öl mit der kinematischen Viskosität ca. 100 cSt bei 40°C (DIN 51562)

**Sasobit®:** Fischer-Tropsch Wachs der Fa. Sasol; Eigenschaften: Erstarrungspunkt (ASTM D 938) ca. 100°C, Nadelpenetration bei 25°C (ASTM D 1321) bis 0,1 mm, Penetration bei 65°C (ASTM D 1321) bis 1,3 mm

**Tecero® 30332:** mikrokristallines Wachs der Fa. Wachs- u. Ceresin-Fabriken Th. C. Tromm GmbH; Eigenschaften: Erstarrungspunkt (ISO 2207): 90 - 95°C, Penetration bei 25°C (DIN 51 579) 0,4 - 0,7 mm, Viskosität bei 120°C (DIN 53 019) 7-11 mPas.

**Beispiel 1**

Zu 15,0 kg Eisenoxidrot-Pigment Bayferrox® 130 wurden 0,150 kg Verdichteröl Energol RC-R 100 bei Raumtemperatur zugegeben und die Mischung wurde in einem 75L Henschelmischer Typ FM75 auf ca. 100 °C aufgeheizt und bis ca. 5 Min. gemischt und danach erfolgte die Zugabe von 1,32 kg Tecerowachs® 30332 und 1,32 kg Sasobit® und die gesamte Mischung wurde weiter ungefähr 15 Min. gemischt (Werkzeugdrehzahl ca. 780 rpm) und dabei bis ca. 200 °C erwärmt. Die Temperatur wurde im Produkt gemessen.

Anschließend wurde das Mittel über ein Ventil ausgetragen und nach der Abkühlung gesiebt und gewogen. Die Ausbeute des Mittels wurde für den gesamten Bereich der Korngröße zwischen 1 bis 6 mm berechnet (Tabelle 1).

**Beispiel 2**

Zu 15,0 kg Eisenoxidrot-Pigment Bayferrox® 130 wurden 0,150 kg Verdichteröl Energol RC-R 100, 1,32 kg Tecerowachs® 30332 und 1,32 kg Sasobit® bei Raumtemperatur zugegeben. Die Mischung wurde in einem 75L Henschelmischer Typ FM75 ca. 15 Min. gemischt (Werkzeugdrehzahl ca. 780 rpm) und dabei bis ca. 200°C erhitzt. Die Temperatur wurde im Produkt gemessen.

Anschließend wurde das Mittel über ein Ventil ausgetragen und nach der Abkühlung gesiebt und gewogen. Die Ausbeute des Mittels wurde für den gesamten Bereich der Korngröße zwischen 1 bis 6 mm berechnet (Tabelle 1).

**Beispiel 3**

Zu 15,0 kg Eisenoxidrot-Pigment Bayferrox® 130 wurden 0,150 kg Verdichteröl Energol RC-R 100, 1,32 kg Tecerowachs® 30332 und 1,32 kg Sasobit® bei Raumtemperatur zugegeben und die Mischung wurde in einem 75L Henschelmischer Typ FM75 ca. 35 Min. bei bis ca. 130°C ohne externe Heizung gemischt (Werkzeugdrehzahl ca. 780 rpm). Die Temperatur wurde im Produkt gemessen.

Anschließend wurde das Mittel über ein Ventil ausgetragen und nach der Abkühlung gesiebt und gewogen. Die Ausbeute des Mittels wurde für den gesamten Bereich der Korngröße zwischen 1 bis 6 mm berechnet (Tabelle 1).

**Beispiel 4**

Zu 15,0 kg Eisenoxidrot-Pigment Bayferrox® 130 wurden 0,150 kg Verdichteröl Energol RC-R 10 0 bei Raumtemperatur zugegeben und die Mischung wurde in einem 75L Henschelmischer Typ FM75 auf ca. 100 °C aufgeheizt und bis ca. 5 Min. gemischt. Danach erfolgte die Zugabe von 1,19 kg Tecerowachs® 30332 und 1,46 kg Sasobit® und die gesamte Mischung wurde weiter 15 Min. gemischt und dabei bis ca. 200 °C erwärmt (Werkzeugdrehzahl ca. 780 rpm). Die Temperatur wurde im Produkt gemessen.

Anschließend wurde das Mittel über ein Ventil ausgetragen und nach der Abkühlung gesiebt und gewogen. Die Ausbeute der Mittel wurde für den gesamten Bereich der Korngröße zwischen 1 bis 6 mm berechnet (Tabelle 1).

**Beispiel 5:**

Zu 15,0 kg Eisenoxidrot-Pigment Bayferrox® 130 wurden 0,150 kg Verdichteröl Energol RC-R 100, 1,19 kg Tecerowachs® 30332 und 1,46 kg Sasobit® bei Raumtemperatur zugegeben und die Mischung wurde in einem 75L Henschelmischer Typ FM75 ca. 15 Min. gemischt (Werkzeugdrehzahl ca. 780 rpm) und dabei bis ca. 200°C erwärmt. Die Temperatur wurde im Produkt gemessen.

Anschließend wurde das Mittel über ein Ventil ausgetragen und nach der Abkühlung gesiebt und gewogen. Die Ausbeute der Mittel wurde für den gesamten Bereich der Korngröße zwischen 1 bis 6 mm berechnet (Tabelle 1).

In den Beispielen 1 bis 5 wurden erfindungsgemäße Mittel mit den Ausbeuten für die Kornfraktion 1-6 mm über 70% mit guten Farbeigenschaften erhalten. Farbmetrisch waren die Proben vergleichbar mit dem Bayferrox® 130 Pulver (Standard 2001). Diese Mittel weisen eine sehr hohe Abriebstabilität (= niedriger Abriebswert) und vorteilhafte asphalttechnologische Eigenschaften auf (Tabelle 1). Die gemessenen asphalttechnologischen Eigenschaften sind gute Indizien für eine ausreichende Festigkeit von Asphalt, der mit den erfindungsgemäßen Mitteln eingefärbt wurde.

**Tabelle 1: Erfindungsgemäße Beispiele**

| Mittel gemäß | Ausbeute der Siebfraktion 1-6 mm | Abriebsert nach 5 Min. | Nadelepenetration a) | Hohlraumgehalt | Erweichungspunkt Ring und Kugel b) | Dispergierbakeit, gemessen über Δa* c) |
|---|---|---|---|---|---|---|
| | Gew.% | Gew.% | | Vol.% | | CIELAB Einheiten |
| Beispiel 1 | >70 | <5 | nb | nb | nb | ±1,0 |
| Beispiel 2 | >70 | <5 | ≤ | <5 | ≥ | ±1,0 |
| Beispiel 3 | >70 | <5 | nb | nb | nb | ±1,0 |
| Beispiel 4 | >70 | <5 | nb | nb | nb | ±1,0 |
| Beispiel 5 | >70 | <5 | ≤ | <5 | ≥ | ±1,0 |

nb => nicht bestimmt
a) ≤ bedeutet: Nadelpenetration kleiner oder gleich im Vergleich zum unpigmentierten Asphalt,
b) ≥ bedeutet: Erweichungspunkt Ring und Kugel größer oder gleich im Vergleich zum unpigmentierten Asphalt,
c) gemessen wurde die Differenz Δa* (= delta a*) = a*-Wert (Mittel) minus a*-Wert (Bezug) im Bitumen. Bezug: Bayferrox 130 Pulverstandard 2001

**Beispiel 6 (Vergleichsbeispiel)**

Hier wurde das Beispiel 1 aus dem Patent EP 0 567 882 B1 (Herstellung eines Mittels über Tellergranulation) wiederholt. Es wurde eine Farbverschiebung $\Delta a^*$ von -0,6 CIELAB Einheiten gegen Bayferrox® 130 Pulver (Standard 2001) gefunden. Allerdings weisen die Mittel eine nur sehr geringe Abriebstabilität auf (Abriebswert nach 5 Minuten von mehr als 20 Gew.%).

**Patentansprüche**

1. Mittel, bei dem mindestens 50 Gew.% des Mittels eine Korngröße von 1 mm oder größer aufweisen, enthaltend

   • mindestens ein anorganisches Pigment,
   • ein oder mehrere Öle,
   • mindestens ein Fischer-Tropsch Wachs mit einem Erstarrungspunkt zwischen 50 und 140 °C und einer Nadelpenetration bei 25°C von bis zu 1 mm, und mindestens ein zweites Wachs mit einem Erstarrungspunkt zwischen 50 und 140 °C, wobei dieses Wachs kein Fischer-Tropsch Wachs und kein Polyolefinwachs ist.

2. Mittel gemäß Anspruch 1, **dadurch gekennzeichnet, dass** die anorganischen Pigmente aus der Gruppe von Eisenoxiden, Eisenoxidhydroxiden, Chromoxiden, Titandioxiden und/oder Mischphasenpigmenten auf Basis von Metalloxiden ausgewählt sind.

3. Mittel gemäß den Ansprüchen 1 oder 2, **dadurch gekennzeichnet**, **dadurch gekennzeichnet, dass** der Mengenanteil von Fischer-Tropsch Wachs bezogen auf die Gesamtmenge an Fischer-Tropsch Wachs und zweitem Wachs von 20 Gew.% bis 80 Gew.% beträgt.

4. Mittel gemäß einem oder mehreren der Ansprüche 1 bis 3, **dadurch gekennzeichnet, dass** die Gesamtmenge an Öl oder Ölen von 0,1 bis 5,0 Gew.% bezogen auf die Gesamtmenge des Mittels beträgt.

5. Mittel gemäß einem oder mehreren der Ansprüche 1 bis 4, **dadurch gekennzeichnet, dass** das zweite Wachs aus der Gruppe von Mineralwachsen, Montanwachsen, pflanzlichen Wachsen und/oder tierischen Wachsen ausgewählt ist.

6. Mittel gemäß einem oder mehreren der Ansprüche 1 bis 5, **dadurch gekennzeichnet, dass** die Gesamtmenge an Fischer-Tropsch Wachs und zweitem Wachs von 5 bis 25 Gew.% bezogen auf die Gesamtmenge des Mittels beträgt.

7. Verfahren zur Herstellung von Mitteln gemäß einem oder mehreren der Ansprüche 1 bis 6, **dadurch gekennzeichnet, dass** entweder

   a) mindestens ein anorganisches Pigment mit einem oder mehreren Ölen vermischt und
   b) das Gemisch aus Schritt a) mit einem oder mehreren Fischer-Tropsch Wachsen und einem oder mehreren zweiten Wachsen vermischt wird,
   c) die Mischung aus Schritt b) bei einer Temperatur oberhalb der Erstarrungspunkte der Fischer-Tropsch Wachse und der zweiten Wachse weiter gemischt wird,
   oder
   a') mindestens ein anorganisches Pigment mit dem Fischer-Tropsch Wachs und dem zweiten Wachs vermischt und
   b') das Gemisch aus Schritt a') mit einem oder mehreren Ölen vermischt wird,
   c') die Mischung aus Schritt b') bei einer Temperatur oberhalb der Erstarrungspunkte der Fischer-Tropsch Wachse und der zweiten Wachse weiter gemischt wird,
   oder
   mindestens ein anorganisches Pigment gleichzeitig mit einem oder mehreren Ölen und mit einem oder mehreren Fischer-Tropsch Wachsen und einem oder mehreren zweiten Wachsen vermischt wird, und die Mischung anschließend bei einer Temperatur oberhalb der Erstarrungspunkte der Fischer-Tropsch Wachse und der zweiten Wachse weiter gemischt wird.

8. Verfahren zur Herstellung von Mitteln gemäß Anspruch 7, **dadurch gekennzeichnet, dass** das entstandene Mittel auf Umgebungstemperatur abgekühlt und anschließend auf einen Korngrößenbereich gesiebt wird, sodass mindestens 50 Gew.% des Mittels eine Korngröße von 1 mm oder größer aufweisen.

9. Verfahren zur Herstellung von Mitteln gemäß Anspruch 7 oder 8, **dadurch gekennzeichnet, dass** die Schritte a) oder a') unterhalb der Erstarrungspunkte des Fischer-Tropsch Wachses und des zweiten Wachses durchgeführt werden.

10. Verfahren zur Herstellung von Mitteln gemäß einem oder mehreren der Ansprüche 7 bis 9, **dadurch gekennzeichnet, dass** die Mischung vor den Schritten b) oder b') auf 60°C bis 150°C aufgeheizt wird.

11. Verfahren zur Herstellung von Mitteln gemäß einem oder mehreren der Ansprüche 7 bis 10, **dadurch gekennzeichnet, dass** die Schritte c) oder c') bei 110°C bis 230°C durchgeführt werden.

12. Verfahren zur Herstellung von Mitteln gemäß einem oder mehreren der Ansprüche 7 bis 11, **dadurch gekennzeichnet, dass** nach gleichzeitiger Zugabe von Öl oder Ölen, Fischer-Tropsch Wachs und zweitem Wachs zum anorganischen Pigment die Temperatur der Mischung auf eine Temperatur von 110°C bis 230°C erhöht wird.

13. Verwendung von Mitteln gemäß einem oder mehreren der Ansprüche 1 bis 6 zum Einfärben von Baustoffen, vorzugsweise Asphalt, Bitumen, bituminösen Mischungen, Teer und teerhaltigen Zusammensetzungen.

14. Verfahren zum Einfärben von Baustoffen, vorzugsweise Asphalt, Bitumen, bituminösen Mischungen, Teer und teerhaltigen Zusammensetzungen umfassend Mischen des Mittels gemäß einem oder mehreren der Ansprüche 1 bis 6 mit dem Baustoff oberhalb dessen Erweichungspunktes.

15. Baustoffe, **dadurch gekennzeichnet, dass** sie mit Mittel gemäß einem oder mehreren der Ansprüche 1 bis 6 gefärbt sind.

Europäisches
Patentamt

European
Patent Office

Office européen
des brevets

**EUROPÄISCHER RECHERCHENBERICHT**

Nummer der Anmeldung

EP 10 19 7397

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 215 249 A1 (DEGUSSA [DE]) 19. Juni 2002 (2002-06-19) * Absätze [0006], [0021] - [0023], [0031]; Ansprüche 1,4,14,15; Tabelle 3 * ----- | 1-15 | INV. C09C1/22 C09C1/24 C09C1/34 C09C1/36 |
| X,D | EP 0 567 882 A1 (BAYER AG [DE]) 3. November 1993 (1993-11-03) * Seite 2, Zeile 46 - Zeile 51 * * Seite 3, Zeile 1 - Zeile 7 * * Beispiele 1,2 * ----- | 1-15 | C04B20/10 C04B26/26 C04B40/00 |

RECHERCHIERTE SACHGEBIETE (IPC)

C09C
C04B

Der vorliegende Recherchenbericht wurde für alle Patentansprüche erstellt

| Recherchenort | Abschlußdatum der Recherche | Prüfer |
|---|---|---|
| München | 23. März 2011 | Nobis, Barbara |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 10 19 7397

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2011

| Im Recherchenbericht angeführtes Patentdokument | Datum der Veröffentlichung | Mitglied(er) der Patentfamilie | Datum der Veröffentlichung |
|---|---|---|---|
| EP 1215249 A1 | 19-06-2002 | AT 265500 T | 15-05-2004 |
| | | BR 0106145 A | 13-08-2002 |
| | | CA 2365161 A1 | 16-06-2002 |
| | | CZ 20014440 A3 | 16-04-2003 |
| | | DE 10062942 A1 | 11-07-2002 |
| | | DE 50102114 D1 | 03-06-2004 |
| | | DK 1215249 T3 | 26-07-2004 |
| | | ES 2215841 T3 | 16-10-2004 |
| | | HU 0105342 A2 | 28-07-2003 |
| | | JP 3893278 B2 | 14-03-2007 |
| | | JP 2002256171 A | 11-09-2002 |
| | | KR 20020048870 A | 24-06-2002 |
| | | MX PA01012975 A | 06-08-2002 |
| | | PL 351156 A1 | 17-06-2002 |
| | | PT 1215249 E | 31-08-2004 |
| | | TR 200401253 T4 | 21-07-2004 |
| | | US 2002112646 A1 | 22-08-2002 |
| EP 0567882 A1 | 03-11-1993 | DE 4214195 A1 | 04-11-1993 |
| | | JP 2659058 B2 | 30-09-1997 |
| | | JP 7258552 A | 09-10-1995 |
| | | US 5389137 A | 14-02-1995 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3778288 A
- EP 0567882 A1
- EP 1598395 A1
- US 6706110 B2
- US 6780234 B2
- EP 0567882 B1

### In der Beschreibung aufgeführte Nicht-Patentliteratur

- The Shell Bitumen Handbook. 1990, 230-232